(19)

**Europäisches Patentamt**
**European Patent Office**
**Office européen des brevets**

(11) **EP 1 873 715 A1**

(12) **EUROPEAN PATENT APPLICATION**

(43) Date of publication:
**02.01.2008 Bulletin 2008/01**

(51) Int Cl.:
*G06T 7/00* (2006.01)   *G06T 3/00* (2006.01)

(21) Application number: **06300734.8**

(22) Date of filing: **30.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Thomson Licensing**
**92100 Boulogne-Billancourt (FR)**

(72) Inventors:
- **Chupeau, Bertrand**
  **92648 BOULOGNE CEDEX (FR)**
- **Oisel, Lionel**
  **92648 BOULOGNE CEDEX (FR)**
- **Massoudi, Ayoub**
  **92648 BOULOGNE CEDEX (FR)**

(74) Representative: **Le Dantec, Claude**
**46, Quai Alphonse Le Gallo**
**92100 Boulogne-Billancourt (FR)**

(54) **Method to estimate the geometric distortion between two images**

(57)     The invention concerns a method to estimate the geometric distortion between a reference image and a distorted image comprising the steps of
- determining control points in each of the images,
- determining for each of these control points a feature vector,
- matching the control points of the two images according to the distance of their feature vectors,
- establishing a distortion model from the matched control points of the two images

According to the invention, the matching step comprises sub-steps of
- finding a match point in the distorted image for each control point of the reference image obtaining a first list of couples of matched points,
- finding a match point in the reference image for each control point of the distorted image obtaining a second list of couples of matched points,
- keeping the control points which belong to couples which are in both lists.

Fig 1

**Description**

The invention concerns a method and a device to estimate the geometric distortion of an image and a method to match pixels in a reference image and in a target image.

Image registration, in other words the process of geometrically aligning two or more images of the same scene, e.g. taken at different times, from different viewpoints, and/or by different sensors, has been tackled by the image processing and computer vision communities for a long time. The majority of registration methods consist of the four following steps:

- Feature detection: salient and distinctive objects (edges, contours, corners...) are detected in both images.
- Feature matching: correspondence is established between features detected in reference and distorted images.
- Transform model estimation: the parameters of the mapping function (distortion model) are estimated from the spatial locations of matched pairs of salient features.
- Image transformation: the distorted image is transformed by means of the mapping function and registered with the reference image.

Whereas a lot of papers have been published on feature detection, the matching step is most of the time not detailed.

The invention concerns the feature matching step.

One application of interest, among many others, is the registration (also called resynchronization) of pirate videos with reference content for recovering forensic tracking (water)marks. In the case of camcorder capture in a theater, indeed, very severe trapezoidal distortion appear when the viewing angle was not perpendicular to the screen, most of the time followed by cropping and resizing. The registration of the pirate content with the reference content is a prerequisite, before recovering the marks (that identify, e.g., the theater).

According to a first aspect, the invention proposes a method to estimate the geometric distortion between a reference image and a distorted image comprising the steps of

- determining control points in each of the images,
- determining for each of these control points a feature vector,
- matching the control points of the two images according to the distance of their feature vectors,
- establishing a distortion model from the matched control points of the two images

According to the invention, the matching step comprises sub-steps of

- finding a match point in the distorted image for each control point of the reference image obtaining a first list of couples of matched points,
- finding a match point in the reference image for each control point of the distorted image obtaining a second list of couples of matched points,
- keeping the control points which belong to couples which are in both lists.

Advantageously, the method comprises a further step of intra frame filtering consisting of:

- Discarding control points of the reference image and of the distorted image having similar feature vectors,
- Defining a neighborhood around some of the control points and keeping only one control point in said neighborhood.

Preferentially, the matching step comprises a further step of discarding couple of control points which distance is not significantly lower than the distance immediately above this distance.

According to the preferred embodiment, the method comprises a step of entering manually a number of matching points pairs by using a graphical interface.

Advantageously, the method comprises a step of computing a distortion model from the manually selected matching points pairs.

In a preferred embodiment, the method comprises a step of modifying the distance between the control points according to the following formula:

$$\begin{cases} if \left\| P1 - M^{-1}(P2) \right\| \le T & d'(F1, G2) = d(F1, G2) \\ else & d'(F1, G2) = +\infty \end{cases}$$

With P1 being the point in the reference image,
P2 being the matched point of P1 in the distorted image obtained during the matching step,
F1 and G2 being the feature vectors associated with P1 and P2 respectively,
T being a predetermined threshold.

In a preferred embodiment, the distance is calculated according to the following formula:

$$d(F, G) = \frac{1}{M} \sum_{i=1}^{M} \left| f_i - g_i \right|,$$

F being the feature vector of the control points of the reference image,
G being the feature vector of the control points of the distorted image.

In another embodiment, the distance is the Euclidian distance.

According to a second aspect, the invention concerns a method to match pixels in a reference image and in a target image. According to the invention, it comprises the steps of

- selecting a number of control pixels in both images, said points being selected using the same criteria,
- finding a match point in the target image for each control point of the reference image obtaining a first list of couples of matched points,
- finding a match point in the reference image for each control point of the target image obtaining a second list of couples of matched points,
- keeping the salient points which belong to couples which are in both lists.

Preferentially, the control points are the salient points of both images.

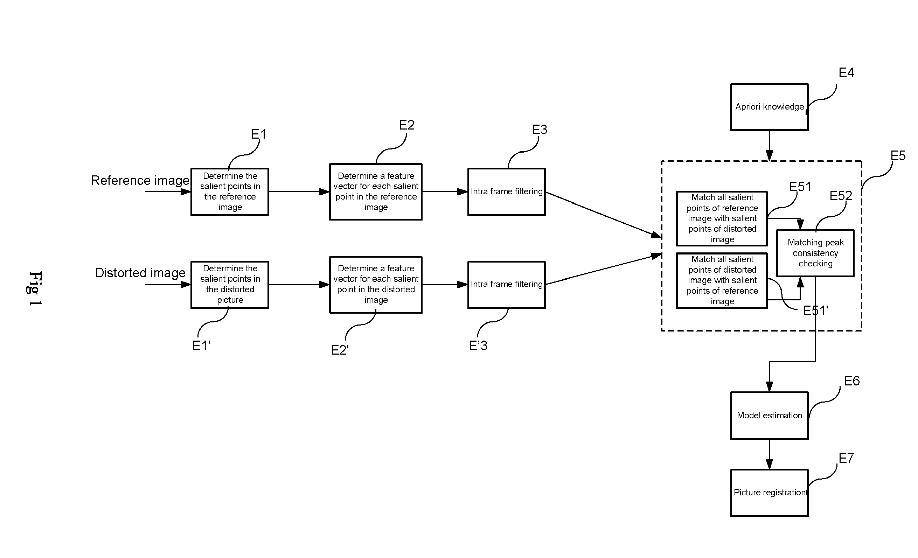

Other characteristics and advantages of the invention will appear through the description of a non-limiting embodiment of the invention, which will be illustrated, with the help of the enclosed unique figure 1 representing a system for determining the geometric distortion between two images implementing a salient point matching step according to the invention,

Embodiments of the present invention may be implemented in software, firmware, hardware or by any combination of various techniques. For example, in some embodiments, the present invention may be provided as a computer program product or software which may include a machine or computer-readable medium having stored thereon instructions which may be used to program a computer (or other electronic devices) to perform a process according to the present invention. In other embodiments, steps of the present invention might be performed by specific hardware component that contain hardwired logic for performing the steps, or by any combination of programmed computer components and custom hardware components.

Thus, a machine-readable medium may include any mechanism for storing or transmitting information in a form readable by a machine (for instance a computer). These mechanisms include, but are not limited to, floppy diskettes, optical disks, hard disk drives, holographic disks, compact disks read-only memory (CD-ROMs), magneto-optical disks, read-only memory (ROMs), random access memory (RAM), Erasable Programmable Read-only memory (EEPROM), magnetic or optical cards, flash memory, a transmission over the Internet, electrical, optical, acoustical or other forms of propagated signals (for instance carrier waves, infrared signals, digital signals, etc), or the like.

Unless specifically stated otherwise as apparent from the following discussion, it is appreciated that discussions utilizing terms such as "processing" or "computing" or "calculating" or "determining" or the like, may refer to the action and processes of a computer system, or similar electronic computing device, that manipulates and transforms data represented as physical quantities within the computer system memories or registers or other such information storage, transmission or display devices.

In the following detailed description of the embodiments, reference is made to the accompanying drawings that show, by way of illustration, specific embodiments in which the invention may be practices. In the drawings, like numeral describe substantially similar components throughout the several views. These embodiments are described in sufficient detail to enable those skilled in the art to practice the invention. Other embodiments may be utilized and structural, logical, and electrical changes may be made without departing from the scope of the present invention. Moreover, it is to be understood that the various embodiments of the invention, although different, are not necessarily mutually exclusive. For example, a particular feature, structure, or characteristic described in one embodiment may be included within other embodiments.

On figure 1, a particular embodiment of the invention applied to the geometric distortion is represented. In a step E1 (respectively E'1), the salient points of a reference image (respectively of a distorted image) are determined. A method for determining the salient points of an image is described in the international patent application WO05/059832 filed in the name of Thomson Licensing SA and published on June 30, 2005. As output of step E1 (respectively E'1), we get a list of salient points L1, respectively L2.

$$L1 = \left\{ P_1^p = (x_1, y_1)_p, p = 1..N_1 \right\}$$

$$L2 = \left\{ P_2^n = (x_2, y_2)_n, n = 1..N_2 \right\}$$

In another embodiment of step E1, a DOG detector can be used in order to detect the salient points by building a multi scale representation of an image, the points of interest being detected by finding local extrema of difference of Gaussian functions. Such a detector shows good detection performance repeatability against luminance and contrast changes, rotations and severe zoom.

During a step E2, (respectively E'2), a feature vector F (respectively G) of size M, is computed for each of the salient points obtained previously in steps E1 and E'1.

$$F = (f_1, f_2, .., f_M)$$

$$G = (g_1, g_2, .., g_M)$$

A method for computing feature vectors is described in the document of David G. Lowe "Distinctive image features from scale invariant keypoints", published in the International Journal of Computer Vision, 60, 2 (2004), pp. 91-110. Such a method computes a local descriptor based on the gradient vectors orientation distribution in a local neighborhood.

Preferentially, the feature vector can also introduce spatial criteria. Therefore points located in a totally different area in both images will have no chance to match.

During a step E3, respectively E'3, an intra-filtering of the salient points is computed in order to reduce the false detection of salient points.

Some of the salient points obtained in step E1and E'1 are discarded.

In a local neighborhood, only a single salient point is kept, for instance the salient point having the maximum detection response.

For each salient point in the picture, if other salient points located elsewhere in the image have a similar feature vectors, they are discarded. This can happen for instance in an image containing a building with windows, each window corner is characterized by the same descriptors, and matching salient points with similar descriptors between two pictures lead to random results;

During a step E5, the salient points of the two images are put in correspondence. This step enables to reduce considerably the false matches introduced by classical methods of naive matching. A naive matching procedure is to scan the shortest list and, for each point, to match with the point in the other list that minimize the feature distance. With such a method, two points of the first list can be matched with the same point of the second list. If the number of false matches is too high, it is impossible to estimate the distortion model, even with a robust procedure that rejects erroneous input data.

Advantageously, for this, step E5 comprises three sub-steps E51, E51', E52.

In a step E51, for each point P1 in the first list, one finds the point P2 in the second list that minimizes the feature distance with it.

The feature distance can be calculated by using different methods.

According to this embodiment, the distance is calculated according to the following formula:

$$d(F,G) = \frac{1}{M}\sum_{i=1}^{M}\left|f_i - g_i\right|$$

According to another embodiment, the distance used is the Euclidian distance:

$$d(F,G) = \frac{1}{M}\sum_{i=1}^{M}(f_i - g_i)*(f_i - g_i)$$

In a step E'51, for each point P2 in the second list, one finds the point P'1 in the first list that minimizes the feature distance with it.

If P1 and P'1 are the same points, or are closely located, closely meaning here in the preferred embodiment that they are not more than two pixels far away from each other, it means that P1 and P2 are the points corresponding to each other in the reference image and in the distorted image.

In a step E52, a refinement of the list of pixels put into correspondence is done. The relative difference between the minimum feature distance dmin1 and the second minimum distance dmin2 is calculated according to the following formula:

$$\frac{d\min 2 - d\min 1}{d\min 1}$$

If this difference is higher than $\alpha$, $\alpha$ being equal to 20% in this embodiment, the pairs of points having $d_{min1}$ has minimum distance is kept as matched points.

Such a matching process is very efficient compared to existing matching processes. It can be used for other applications. Therefore, the matching step proposed here constitutes itself an innovative aspect of the invention, disconnected to its application to the distortion method.

The matching process described so far makes no restriction on the pixel locations, which means that no hypothesis is done on the distortion.

With "nice" picture content, that is enough details, spread over the full picture extent, good automatic matching performance will be obtained. On pictures with salient points localized in a given subpart, or with repetitive patterns making the salient point features not discriminant, results can be improved by introducing a priori knowledge on the spatial distortion.

In a step E4, which is optional, a help can be given in order to match more accurately the salient points in the two images. Several embodiments can be foreseen, these embodiments can be combined.

A user can enter a manual selection of a set of matching pixels pair, for example by mouse click in a graphical user interface displaying side by side the reference and distorted pictures. The minimum number of matching pairs depends on the dimension of the distortion model: 3 pairs for a 6-dimensional affine model, 4 pairs for a 8-dimensional homographic model, etc.

By entering the points manually, the user introduces also spatial constraints.

After the selection of pixels, a raw distortion model M() can be estimated. This estimation has not to be very accurate: in particular the mouse-selection of pixels has not to be pixel accurate.

Letting F(P1), being feature vector computed at salient point P1 in reference image, G(P2), being feature vector computed at salient point P2 in distorted picture, M() being the distortion model mapping a pixel of reference picture with a pixel of distorted picture, and $M^{-1}()$ the inverse mapping function, this new feature distance $d'()$ can be written as follows:

$$\begin{cases} if \left\| P1 - M^{-1}(P2) \right\| \le T & d'(F1, F2) = d(F1, F2) \\ \qquad\qquad else & d'(F1, F2) = +\infty \end{cases}$$

T being a threshold, equal to 10 in this embodiment.

Therefore, the points which have a distance d' which is infinite are not considered as being matching points. They are discarded.

During a step E6, one estimates then the parametric distortion model from the final list of matched salient points. For example, an 8-dimensional homographic model maps (x,y) coordinates to (x',y') as follows:

$$\begin{cases} x' = \dfrac{h_0 x + h_1 y + h_2}{h_6 x + h_7 y + 1} \\ y' = \dfrac{h_3 x + h_4 y + h_5}{h_6 x + h_7 y + 1} \end{cases}$$

The coefficients $(h_j)$ that best fit to the input data $\{(x,y), (x',y')\}$ can be estimated by simple mean squares estimation, but it is preferable to use a robust method able to reject erroneous input data, also called outliers.

In a step E7, the distorted picture is registered thanks to the estimation model obtained previously in step E6. It is registered by applying the inverse mapping function that was estimated in step E6.

The innovative matching step E5 has been described in the context of a distortion method. However, the matching step can be applied to other applications.

More generally, this matching step can be applied by using not only salient points of images but can use other selected pixels. For instance the selected points can also be points selected according to other criteria. They can be points having a luminance comprised in a certain range, or selected according to their texture or other parameters the man skilled in the art can envisage. For instance, these points can be the center of gravity of some areas, the end of lines, corners... More generally, these points are called "control points".

Therefore, despite the distortion method has been described by using salient points, it can be applied to any pixel selected according to another criterion.

Most of the applications are dedicated to images registration, in the field of computer vision, medical imaging, cartography, images mosaic, temporal changes detection, super-resolution images.

**Claims**

1. Method to estimate the geometric distortion between a reference image and a distorted image comprising the steps of

   - determining control points in each of the images,
   - determining for each of these control points a feature vector,
   - matching the control points of the two images according to the distance of their feature vectors,
   - establishing a distortion model from the matched control points of the two images

   **Characterized in that** the matching step comprises sub-steps of

   - finding a match point in the distorted image for each control point of the reference image obtaining a first list of couples of matched points,
   - finding a match point in the reference image for each control point of the distorted image obtaining a second list of couples of matched points,
   - keeping the control points which belong to couples which are in both lists.

2. Method according to claim 1 **characterized in that** it comprises a further step of intra frame filtering consisting of:

- Discarding control points of the reference image and of the distorted image having similar feature vectors,
- Defining a neighborhood around some of the control points and keeping only one control point in said neighborhood.

3. Method according to claim 1 or 2 **characterized in that** the matching step comprises a further step of discarding couple of control points which distance is not significantly lower than the distance immediately above this distance.

4. Method according to one of the preceding claims **characterized in that** it comprises, a step of entering manually a number of matching points pairs by using a graphical interface.

5. Method according to claim 4 **characterized in that** it comprises a step of computing a distortion model from the manually selected matching points pairs.

6. Method according to claim 5 **characterized in that** it comprises a step of modifying the distance between the control points according to the following formula:

$$\begin{cases} if \left\| P1 - M^{-1}(P2) \right\| \le T \quad d'(F1, G2) = d(F1, G2) \\ \qquad else \quad d'(F1, G2) = +\infty \end{cases}$$

With P1 being the point in the reference image,
P2 being the matched point of P1 in the distorted image obtained during the matching step,
F1 and G2 being the feature vectors associated with P1 and P2 respectively,
T being a predetermined threshold.

7. Method according to one of the preceding claims **characterized in that** the distance is calculated according to the following formula:

$$d(F, G) = \frac{1}{M} \sum_{i=1}^{M} \left| f_i - g_i \right|,$$

F being the feature vector of the control points of the reference image,
G being the feature vector of the control points of the distorted image.

8. Method according to one of claims 1 to 6 **characterized in that** the distance is the Euclidian distance.

9. Method to match pixels in a reference image and in a target image **characterized in that** it comprises the steps of

- selecting a number of control pixels in both images, said points being selected using the same criteria,
- finding a match point in the target image for each control point of the reference image obtaining a first list of couples of matched points,
- finding a match point in the reference image for each control point of the target image obtaining a second list of couples of matched points,
- keeping the salient points which belong to couples which are in both lists.

10. Method according to claim 9 **characterized in that** the control points are the salient points of both images.

**Fig 1**

Reference image → [E1] Determine the salient points in the reference image → [E2] Determine a feature vector for each salient point in the reference image → [E3] Intra frame filtering

Distorted image → [E1'] Determine the salient points in the distorted picture → [E2'] Determine a feature vector for each salient point in the distorted image → [E'3] Intra frame filtering

[E4] Apriori knowledge

[E5]
- [E51] Match all salient points of reference image with salient points of distorted image
- [E51'] Match all salient points of distorted image with salient points of reference image
- [E52] Matching peak consistency checking

[E6] Model estimation

[E7] Picture registration

European Patent Office

**EUROPEAN SEARCH REPORT**

Application Number

EP 06 30 0734

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 504 569 B1 (JASINSCHI RADU S [US] ET AL) 7 January 2003 (2003-01-07) | 1,4,5, 7-10 | INV. G06T7/00 G06T3/00 |
| Y | * abstract, Fig. 4, cols. 4-9 * | 3 | |
| | ----- | | |
| X | US 6 834 120 B1 (LECLERC YVAN G [US] ET AL) 21 December 2004 (2004-12-21) | 1,4,5, 7-10 | |
| Y | * abstract, Figs. 1,20-21, cols. 1-4, 8 * | 3 | |
| | ----- | | |
| Y | US 6 975 755 B1 (BAUMBERG ADAM MICHAEL [GB]) 13 December 2005 (2005-12-13) | 3 | |
| A | * abstract, Figs. 1-6,14, cols. 26-28 * | 1,2,4-10 | |
| | ----- | | |
| A | MAINTZ J B A ET AL: "A SURVEY OF MEDICAL IMAGE REGISTRATION" MEDICAL IMAGE ANALYSIS, OXFORDUNIVERSITY PRESS, OXFORD, GB, vol. 2, no. 1, 1998, pages 1-37, XP001032679 ISSN: 1361-8423 * abstract, sections 4.2.1, 5 and 6 * | 1-10 | |
| | ----- | | TECHNICAL FIELDS SEARCHED (IPC) |
| A | RAHMAN A F R ET AL: "Selective partition algorithm for finding regions of maximum pairwise dissimilarity among statistical class models" PATTERN RECOGNITION LETTERS, NORTH-HOLLAND PUBL. AMSTERDAM, NL, vol. 18, no. 7, July 1997 (1997-07), pages 605-611, XP004730056 ISSN: 0167-8655 * abstract, section 2, Figs. 1,2 * | 2 | G06T |
| | ----- | | |

The present search report has been drawn up for all claims

| Place of search | Date of completion of the search | Examiner |
|---|---|---|
| Munich | 22 December 2006 | Borotschnig, Hermann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 30 0734

This annex lists the patent family members relating to the patent documents cited in  the above-mentioned European search report.
The members are as contained in the European Patent Office EDP file on
The European Patent Office is in no way liable for these particulars which are merely given for the purpose of information.

22-12-2006

| Patent document cited in search report | | Publication date | Patent family member(s) | | Publication date |
|---|---|---|---|---|---|
| US 6504569 | B1 | 07-01-2003 | EP | 0952552 A2 | 27-10-1999 |
| US 6834120 | B1 | 21-12-2004 | NONE | | |
| US 6975755 | B1 | 13-12-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 05059832 A

**Non-patent literature cited in the description**

• **DAVID G. LOWE.** Distinctive image features from scale invariant keypoints. *International Journal of Computer Vision,* 2004, vol. 60 (2), 91-110